# FASCICULE DE BREVET EUROPEEN

(11) **EP 1 134 886 B1**
(45) Date de publication et mention de la délivrance du brevet: **12.01.2011**
(21) Numéro de dépôt: 01400664.7
(22) Date de dépôt: 14.03.2001
(51) Int. Cl.: H02P 9/48, H02J 7/14

(54) **Redresseur pour alternateur polyphasé de véhicules automobiles à pertes énergétiques réduites**
Verlustarmer Gleichrichter für einen Mehrphasen-Generator in Kraftfahrzeugen
Low loss rectifier for polyphase vehicle generators

(30) Priorité: 17.03.2000 FR 0003495
(43) Date de publication de la demande: 19.09.2001
(73) Titulaire: VALEO EQUIPEMENTS ELECTRIQUES MOTEUR, 94017 Créteil Cedex (FR)
(72) Inventeur: Pierret, Jean-Marie, 75012 Paris (FR); Masson, Philippe, 94470 Boisy-St-Léger (FR)

(56) Documents cités:
- EP-A- 0 911 958
- US-A- 4 382 222
- US-A- 4 883 973
- US-A- 5 748 463
- PATENT ABSTRACTS OF JAPAN vol. 1996, no. 6, 28 juin 1996 (1996-06-28) -& JP 08 047179 A (NIPPONDENSO CO LTD), 16 février 1996 (1996-02-16)

## Description

L'invention concerne le redressement de tensions polyphasées en sortie d'alternateurs ou d'aiterno-démarreurs pour alimenter les réseaux de bord et charger les batteries des véhicules automobiles.

En général les circuits électroniques de puissance ayant cette fonction se présentent sous la forme d'un pont de Graetz.

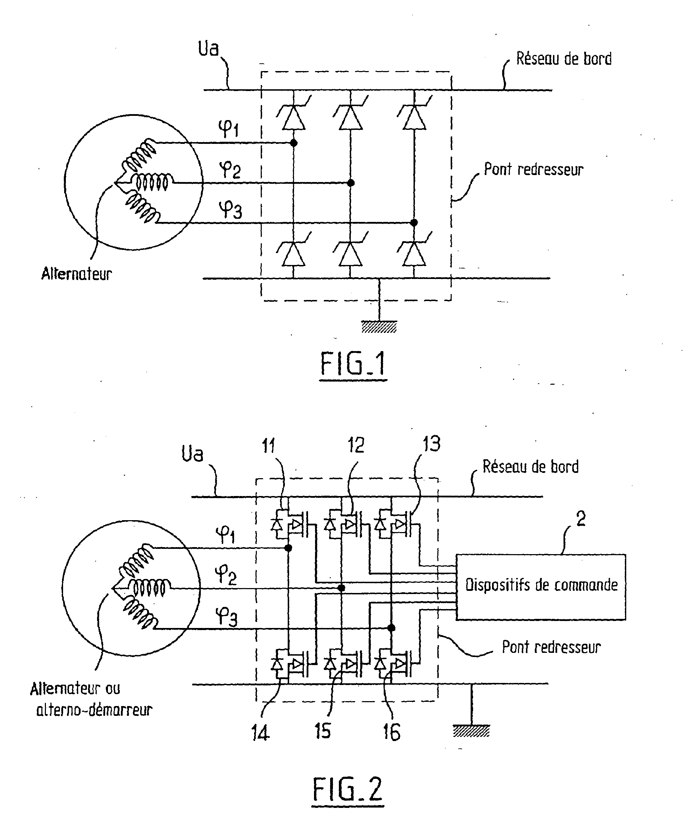

On a représenté à la figure 1 un pont redresseur classique à base de diodes de puissance, placées entre l'alternateur et un réseau de bord d'un véhicule.

Les diodes de puissance qui équipent un tel pont redresseur ont des tensions de déchet relativement élevées (de l'ordre de 1 volt) par rapport à une tension de sortie Ua de l'alternateur (tension du réseau de bord du véhicule, de l'ordre de 14 volts).

Compte tenu que, sur une ligne de phase donnée, la charge du réseau de bord et de la batterie qui y est connectée s'effectue lorsque les deux diodes en série sur cette ligne sont en en conduction, la perte de puissance d'un tel dispositif est donc égale à : 2/14 X 100 soit : 14, 3 %.

Par exemple, la puissance dissipée pour le redressement d'un alternateur de 1 kilowatt est de 143 watts. Ainsi, le générateur d'énergie électrique (alternateur et redresseur) subit une perte de rendement importante.

A la figure 2, on a représenté un redresseur d'alternateur classique à base de transistors de puissance dans lequel les transistors sont commandés en synchronisme avec le courant présent dans un enroulement induit de l'alternateur (redressement synchrone).

Le montage de la figure 2 sert aussi de circuit d'alimentation d'enroulements stator d'alterno-démarreurs, formant une série de commutateurs de puissance possédant des faibles tensions de déchet.

Un tel circuit permet d'éviter une perte de puissance aussi importante qu'avec des diodes, des transistors (référencés 11 à 16 sur la figure 2) offrant des tensions de déchet beaucoup plus faibles. En effet, la tension de déchet étant alors de l'ordre de 200 millivolts (contre 1 volt pour les diodes), la puissance perdue dans le pont redresseur devient inférieure à 28,6 watts.

Cependant, alors que les diodes commutent naturellement lors du redressement, les transistors sont pilotés par un dispositif de commande sophistiqué, par exemple un microcontrôleur, des sondes de courant détectant le sens du courant dans les bobinages de l'induit de l'alternateur, un pont image, etc. Le dispositif à pont image est décrit dans la demande de brevet FR 97 12879.

Les dispositifs de commande proposés jusqu'à présent sont particulièrement coûteux.

De plus, dans le cas du pont image, décrit dans la demande de brevet FR 97 12 879, on a proposé d'adopter une série de modules aptes chacun à commander un des interrupteurs, à partir d'une comparaison entre une tension d'une phase et une tension de référence.

Un tel dispositif, s'il est de conception de réalisation simple, et toutefois particulièrement sensible aux variations de la tension de bord ainsi qu'aux variations entre la masse et la tension de bord, qui parasitent les résultats de la comparaison.

Pour compenser ces variations, on a proposé de fournir à chaque composant de comparaison une tension de référence contrôlée, émise par un dispositif de régulation centrale.

Ce dispositif de régulation centrale, bien que nécessaire au bon fonctionnement de chaque comparateur, reste, de par la fonction complexe qu'il remplit, particulièrement coûteux.

Dans le document US 5 74 8 463, conforme au préambule de la revendication 1 il est poposé une solution avec un controleur associé à des composants de comparaison.

Le but de l'invention est de proposer un redresseur d'alternateur à faibles pertes, tout en restant économique.

Ce but est atteint grâce à la partie caracterisante de la revendication 1.

Du fait que les modules de comparaison ne dépendent pas d'un traitement effectué par un circuit indépendant de ces modules, on ne véhicule aucun signal particulier entre les différents modules, ce qui diminue le coût de réalisation du redresseur.

D'autres caractéristiques, buts et avantages apparaîtront à la lecture de la description détaxée qui va suivre, à l'aide des dessins annexés sur lesquels :
- la figure 1 représente un montage classique de pont redresseur d'alternateur équipé de diodes de puissance permettant d'alimenter le réseau de bord d'un véhicule.
- la figure 2 représente un montage connu à pont redresseur d'alternateur équipé de transistors de puissance, dans lequel les transistors sont commandés en synchronisme avec le courant présent dans les enroulements induits des alternateurs (redressement synchrone).
- La figure 3 représente de manière schématique un montage selon l'invention;
- La figure 4 représente un montage d'une branche d'un circuit tel que celui de la figure 3, selon une première variante de l'invention;
- La figure 5 représente les variations au cours du temps d'une tension de bord d'un véhicule automobile ;
- La figure 6 représente un montage d'une branche d'un circuit tel que celui de la figure 3, selon une seconde variante de l'invention;

De façon connue, le présent pont redresseur est équipé de transistors.

Il comporte un ensemble de commande qui compare :
- le potentiel de chaque phase avec le potentiel de masse du pont redresseur (pour la commande des transistors reliés à la masse) ;
- le potentiel de chaque phase avec le potentiel de sortie (Ua) du pont redresseur relié au réseau et à la batterie (pour la commande des transistors reliés au potentiel de sortie du pont redresseur).

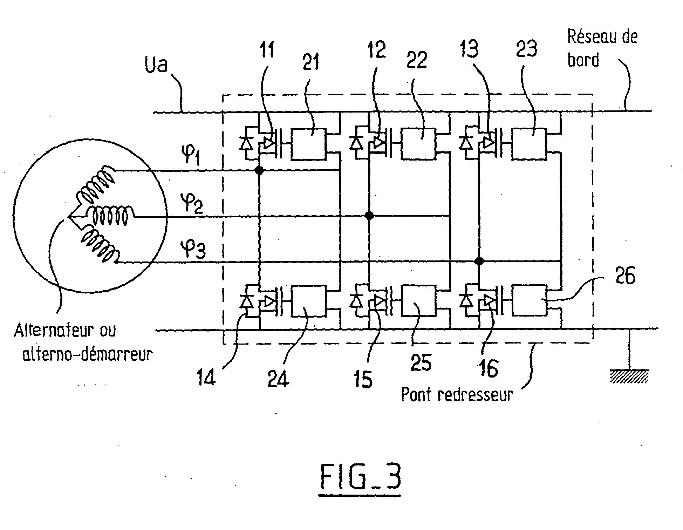

Dans le cas du dispositif de la figure 3, on affecte pour chaque transistor 11 à 16, un dispositif de commande 21 à 26 qui lui est propre. Chacun de ces dispositifs de commande est identique d'une branche à l'autre du pont redresseur. L'alternateur est ici un alternateur triphasé dont les phases sont référencées ϕ1 à ϕ3.

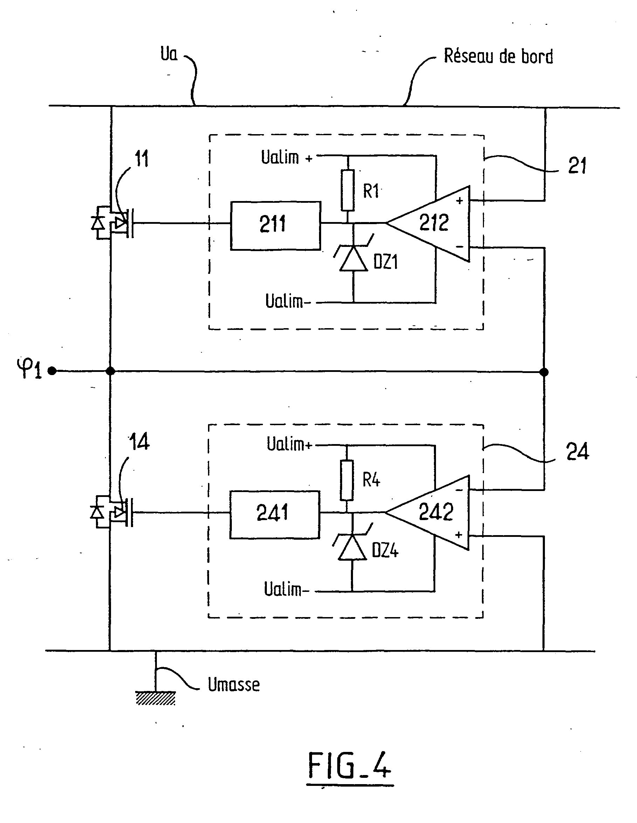

La figure 4 représente deux de ces dispositifs de commande, 21 et 24, pour la branche du pont redresseur à la sortie phase ϕ1).

Ce mode de réalisation peut être identique pour l'une quelconque des autres branches.

Le dispositif de commande 21 comporte un circuit de contrôle 211 de la grille du transistor 11 qui est ici un transistor MOS. Un tel circuit est connu sous le nom de « circuit driver » : il permet d'assurer la commande du MOS 11 à partir d'un signal logique.

Ce signal logique est ici délivré par la sortie d'un comparateur constitué par un amplificateur opérationnel 212. La sortie de cet amplificateur 212 est reliée à une tension Ualim+ par une résistance R1. Cette même sortie de l'amplificateur 212 est reliée à une tension Ualim- par une diode Zener DZ1. Cette résistance R1 et cette diode DZ1 calibrent le niveau de sortie du comparateur 212 à une valeur compatible avec les niveaux d'entrée du « driver » 211 : par exemple, 0 et 5 volts par rapport au potentiel Ualim-.

Le comparateur 212 compare le potentiel de la phase ϕ1 avec la tension de sortie de l'alternateur Ua (tension de réseau de bord ou tension de batterie). Si le potentiel de la phase ϕ1 est supérieur à Ua, le niveau de sortie du comparateur 212 et tel que le transistor MOS 11 est rendu fermé. Si le potentiel de la phase ϕ1 est inférieur à Ua, le niveau de sortie du comparateur 212 est tel que le transistor MOS 11 est rendu ouvert.

Par exemple, si Ualim- correspond au potentiel de masse, le comparateur 212 applique un niveau zéro (masse) à l'entrée du driver 211 pour fermer le transistor 11 et un niveau de 5 volts pour ouvrir ce transistor 11. Ainsi, le redressement de l'alternance positive du signal phase ϕ1 est assuré par la fermeture du transistor 11.

Le dispositif de commande 24, placé lui entre la phase ϕ1 et la masse, assure le redressement de l'alternance négative du signal phase ϕ1, de façon semblable, par la fermeture du transistor 14, commandé par un « driver » 241 selon le niveau de sortie d'un amplificateur opérationnel 242 formant comparateur. Une résistance R4 et une diode Zener DZ4 calibrent de la même façon le niveau de sortie du comparateur 242 à une valeur compatible avec les niveaux d'entrée du « driver » 241 : par exemple 0 et 5 volts par rapport au potentiel de masse.

Si le potentiel de la phase ϕ1 est inférieur au potentiel de masse, le niveau de sortie du comparateur 242 est tel que le transistor MOS 14 est fermé. Si le potentiel de la phase ϕ1 est supérieur au potentiel de masse, le niveau de sortie du comparateur 242 est tel que le transistor MOS 14 est ouvert. Par exemple, le comparateur 242 applique un niveau 5 volts à l'entrée du « driver » 241 pour fermer le transistor 14 et un niveau zéro (masse) pour ouvrir ce transistor 14.

Ainsi, les deux alternances du signal phase ϕ1 sont redressées par la fermeture des transistors 11 et 14 sous l'action de leurs dispositifs de commande respectifs 21 et 24 selon le niveau de sortie des comparateurs respectifs 212 et 242.

Ce dispositif de commande est réalisé avec des composants électroniques courants, peu volumineux et bon marché.

Il existe des circuits intégrés regroupant les six « drivers » des six dispositifs de commande 21 à 26 contrôlant respectivement les transistors 11 à 16 du pont redresseur, tel que le circuit intégré existant sous la dénomination HIP4086 de Harrys.

Les six comparateurs des six dispositifs de commande 21 à 26 existent en groupe de deux sous la dénomination LM2903 et en groupe de quatre sous la dénomination LM2901.

Les deux comparateurs 212 et 242 ont ici des sorties à collecteur ouvert nécessitant des résistances de charge référencées respectivement R1, R4.

On utilise ici le même montage sur les trois branches de redressement respectives des trois phases, obtenant ainsi six modules quasiment identiques de comparaison, et de régulation de cette comparaison par rapport à la tension de référence utilisée à chaque fois.

Certaines applications utilisant déjà un pont de Graetz à transistors pour faire fonctionner l'alternateur en moteur (par exemple : cas de l'alterno-démarreur). Dans ces conditions, on a tout intérêt à utiliser le pont décrit ici en tant que redresseur synchrone lorsque la machine fonctionne en mode alternateur.

Le présent dispositif de redressement fonctionne alors en tant que circuit d'alimentation de puissance des enroulements stator de l'alternateur pour faire fonctionner cet alternateur en moteur (par exemple : cas de l'alterno-démarreur).

On élimine ainsi le pont redresseur à diodes qui diminue fortement le rendement de la machine (figure 1).

Les alimentations Ualim+ et Ualim- d'alimentation des comparateurs peuvent être différentes des potentiels du réseau de bord Ua et de la masse.

Ces alimentations dépendent surtout des amplitudes des signaux phases, qui vont de part et d'autre de Ua et de la masse, ainsi que d'un éventuel taux d'atténuation de ces signaux à l'entrée des comparateurs par des diviseurs de tensions.

En général, ces alimentations existent déjà pour la fonction démarreur dans le cas d'un alterno-démarreur.

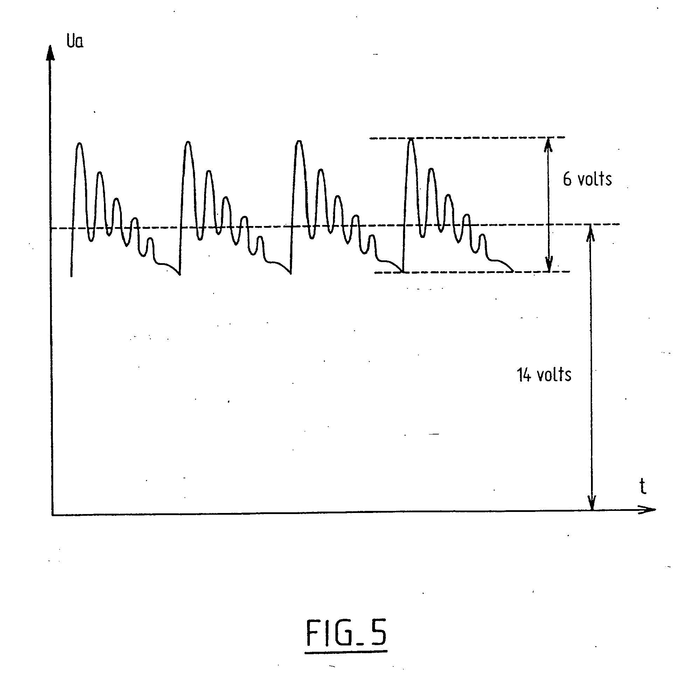

Il est connu que la tension du réseau de bord en sortie de l'alternateur est fortement perturbée par le redressement du courant délivré par l'alternateur. Les oscillations de tension qui en résultent sont plus importantes avec des câblages longs possédant une plus grande impédance. On a représenté à la figure 5 l'évolution typique de la tension Ua au cours du temps. L'amplitude de ces oscillations peut atteindre 6 volts pour une tension réseau de 14 volts.

Dans ces conditions, le comparateur 212 relié au potentiel Ua doit comparer le signal ϕ1 par rapport au potentiel Ua fortement variable par rapport aux potentiels de ses alimentations si celles-ci sont référencées par rapport à la masse. Il en est de même pour les comparateurs non représentés 222 et 232 des autres branches du pont, qui sont reliés au potentiel Ua.

Pour éviter une perturbation de ces comparateurs par réjection de mode commun, le dispositif d'alimentation des comparateurs 212 à 262 des trois branches du pont présente :
- pour alimenter les comparateurs 212, 222 et 232 effectuant la comparaison des signaux phases par rapport à Ua, au moins une alimentation référencée par rapport à la tension du réseau Ua ;
- pour alimenter les comparateurs 242, 252 et 262 effectuant la comparaison des signaux phases par rapport à la tension de la masse, notée Umasse, au moins une alimentation référencée par rapport à cette tension de masse Umasse.

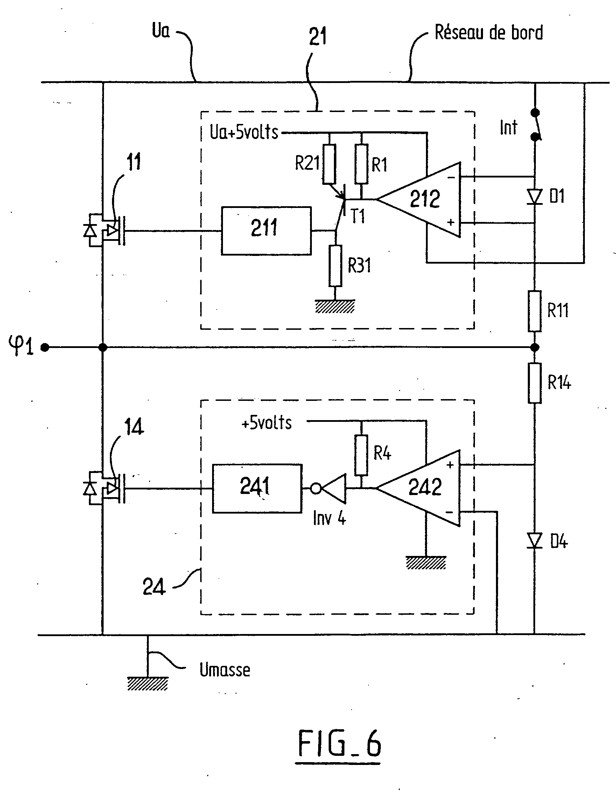

Les comparateurs 222, 232, 252 et 262 ne sont pas représentés car faisant partie des branches reliées aux phases ϕ2 et ϕ3, également non représentées sur les figures 4 et 6.

La figure 6 représente un mode de réalisation pour la branche du pont redresseur reliée à la phase ϕ1 permettant de supprimer les perturbations provoquées par les fluctuations relatives de Ua et de la tension de la masse (notée Umasse).

Le comparateur 242 est alimenté entre la masse (Umasse) et un potentiel fixe (Umasse+ 5 volts) par rapport à la masse.

Le comparateur 212 est alimenté, lui, entre Ua et un potentiel fixe par rapport à Ua (Ua + 5 volts).

Ainsi, toute variation de la tension du réseau de bord en sortie de l'alternateur est transmise à l'alimentation du comparateur 212 de sorte que les oscillations de la tension Ua sur son entrée de commande n'ont aucun effet sur ce comparateur.

De même, l'alimentation du comparateur 242 étant indexée sur la tension de masse Umasse, la comparaison effectuée par ce comparateur n'est pas sensible aux variations entre les tension Ua et Umasse.

Les tensions d'alimentation des comparateurs 212, 222, 232, 242, 252 et 262 étant réduites (5 volts), le pont redresseur comporte des moyens d'écrêtage des signaux phases au niveau des entrées de ces comparateurs pour les rendre compatibles avec ces tensions d'alimentation.

Ces moyens d'écrêtage sont ici constitués les moyens suivants.

La borne de commande négative du comparateur 212 étant reliée à la tension Ua, on place entre cette borne négative et la borne positive du comparateur une diode D1 montée passante de la borne négative vers la borne positive. La borne positive est à son tour reliée à la ligne de phase ϕ1 par une résistance R11.

Le potentiel de l'entrée positive du comparateur 212 est limité par la tension de jonction de la diode D1 : environ -0,8 volts, et par la diode parasite du transistor 11 si ce transistor est ouvert : environ +1 volt par rapport à Ua. Lorsque le transistor 11 est fermé, le potentiel de cette entrée positive du comparateur 212 est limité par la tension de déchet de ce transistor 11 : de l'ordre de + 0,2 volt.

La borne de commande positive du comparateur 242 est reliée à la tension de phase ϕ1 par une résistance R14 et à la masse par une diode D4 montée passante vers la masse. La borne négative du comparateur 242 est, elle, reliée directement à la masse.

Le potentiel de l'entrée positive du comparateur 242 est limité par la tension de jonction de la diode D4 : environ + 0,8 volt, et par la diode parasite du transistor 14 si ce transistor est ouvert : environ -1 volt .

Lorsque le transistor 14 est fermé, le potentiel de cette entrée positive du comparateur 242 est limité par la tension de déchet de ce transistor 14 : de l'ordre de - 0,2 volt.

Les potentiels négatifs (-0,8 volt, -1 volt) appliqués sur les entrées des comparateurs 212 et 242 peuvent perturber le fonctionnement de ces derniers. Avec les comparateurs du type de ceux connus sous la référence LM2903, il est préférable de relier les entrées négatives aux potentiels négatifs des alimentations de ces comparateurs et de relier aux phases les entrées positives (via D1, R11, D4, R14), moins sensibles aux potentiels négatifs.

Le pont redresseur comporte ici des moyens pour supprimer le courant consommé par les moyens de commande lorsque l'alternateur ne tourne pas.

En particulier, le courant consommé par les moyens d'écrêtage des signaux phases (D1, R11, D4, R14) est contrôlé par un commutateur Int qui est fermé quand l'alternateur est en rotation, et ouvert quand l'alternateur est au repos.

En effet, les moyens d'écrêtage forment une ligne reliant le réseau de bord Ua à la masse par l'intermédiaire de diodes et de résistances en série, successivement D1, R11, R14 et D4. Le commutateur Int permet de couper cette ligne lorsque l'alternateur ne fonctionne pas.

De plus, la consommation des comparateurs 212 et 242 est supprimée en ouvrant les alimentations de ces comparateurs : le potentiel Ua+5 volts est ramené au potentiel Ua pour le comparateur 212, et le potentiel masse+5 volts est ramené au potentiel de masse pour le comparateur 242.

Des circuits adaptateurs R21, T1, R31 d'une part, Inv4 d'autre part, ont pour but de rendre les sorties des comparateurs 212 et 242 compatibles avec les entrées des « drivers » 211 et 241 dont les niveaux sont habituellement compris entre la masse et 5 volts.

La figure 6 comporte des circuits adaptateurs spécialement adaptés aux composants de référence HIP4086 et LM2903 : le signal de sortie du comparateur 212 varie entre Ua et Ua+5 volts, ces niveaux étant fixés par l'alimentation de ce comparateur 212. Le circuit adaptateur constitué par la résistance R21, le transistor T1 et la résistance R31 a pour but d'inverser et d'amener ce signal de sortie entre les niveaux de masse et 5 volts, compatibles avec l'entrée du « driver » 211.

Le circuit adaptateur inv4 est un simple inverseur entre la sortie du comparateur 242 et le « driver » 241.

Bien entendu, tous les procédés et moyens figurant dans la description ci-dessus pour la branche du pont redresseur reliée à la phase ϕ1 est applicable pour les branches reliées aux autres phases ϕ2 et ϕ3.

## Revendications

1. Redresseur de tension pour alternateur polyphasé de véhicule automobile, destiné à être connecté entre un alternateur, un réseau de bord (Ua) du véhicule et une ligne de masse (Umasse) du véhicule, comportant un pont d'interrupteurs (11, ..., 16) ainsi qu'une série de modules (21, ..., 26) prévus chacun pour comparer une tension de phase (ϕ1, ϕ2, ϕ3), de l'alternateur avec une tension de référence (Ua,Umasse) et commander un des interrupteurs (11, ..., 16) en fonction du résultat de la comparaison, le redresseur comportant en outre des moyens (212, 242) pour compenser des effets de variations d'une tension de référence (Ua, Umasse) sur une comparaison, danslequel chaque module de comparaison (21, ..., 26) comporte des moyens (212, 242) distincts de ceux des autres modules, qui sont prévus pour réaliser de manière distincte des autres modules (21, ..., 26) une comparaison et une compensation des variations de la tension de référence (Ua, Umasse) de ce module, de sorte que chaque module (21, 26) ne nécessite aucun autre signal que ceux ayant même variation que la tension de phase (ϕ1, ϕ2, ϕ3), et que ceux ayant même variation que sa tension de référence (Ua, Umasse), **caractérisé en ce que** chaque module (21, ..., 26) comporte un composant de comparaison (212, 242) nécessitant une alimentation énergétique propre, et produisant un résultat de comparaison dépendant d'un niveau de son alimentation, et **en ce que** le redresseur comporte des moyens pour alimenter le composant avec une tension de mêmes variations que la tension de référence (Ua,Umasse) de ce composant.

2. Redresseur selon la revendication 1, **caractérisé en ce que** l'une des tensions de référence (Ua, Umasse) est une tension de mêmes variations que la tension de réseau de bord (Ua).

3. Redresseur selon la revendication 1 ou 2, **caractérisé en ce que** l'une des tensions de référence (Ua, Umasse) est une tension de mêmes variations que la tension de masse (Umasse).

4. Redresseur selon l'une des revendications 1 à 3, **caractérisé en ce que** les modules de comparaison (21, ...,26) incluent chacun un amplificateur opérationnel (212, ..., 262) dont une entrée de commande reçoit une tension représentant la tension de réseau de bord (Ua) ou la masse (Umasse), et l'autre entrée de commande reçoit une tension représentant la tension d'une phase (ϕ1, ϕ2, ϕ3).

5. Redresseur selon la revendication 4, **caractérisé en ce que** le composant à alimentation énergétique propre (212, ..., 262) est l'amplificateur opérationnel (212, 262).

6. Redresseur selon la revendication précédente, **caractérisé en ce que** l'amplificateur opérationnel (212, ..., 262) d'un module (21, ..., 26) est alimenté sur sa borne d'alimentation basse par une première tension ayant même variations que ladite tension de référence et sur sa borne d'alimentation haute par une seconde tension égale à la première tension augmentée d'une constante.

7. Redresseur selon l'une quelconque des revendications précédentes, **caractérisé en ce qu'**il comporte des moyens (D1, R11, R14, D4) pour écrêter le signal de phase (ϕ1, ϕ2, ϕ3) en entrée d'au moins un module de comparaison (21, ..., 26).

8. Redresseur selon l'une quelconque des revendications précédentes, **caractérisé en ce qu'**il comporte des moyens de commutation (Int) pour couper une circulation de courant dans le redresseur lors d'un arrêt de celui-ci.

9. Redresseur selon l'une quelconque des revendications précédentes, **caractérisé en ce que** chaque module de comparaison (21, ..., 26) comporte un moyen (212, ..., 262) apte à délivrer au moins deux signaux représentatifs respectivement de deux résultats opposés de la comparaison, et **en ce qu'**il comporte également des moyens (T1, R21, R31, Inv4) aptes à transformer ces deux signaux en des signaux lisibles par un élément de commande (211, ..., 261) de l'interrupteur associé (11, ..., 16).

10. Redresseur selon l'une quelconque des revendications précédentes, **caractérisé en ce qu'**il est prévu pour fonctionner en tant que circuit d'alimentation de puissance d'un alternateur fonctionnant en mode moteur.

## Claims

1. Voltage rectifier for a motor vehicle polyphase alternator, which is designed to be connected between an alternator, an on-board network (Ua) of the vehicle and an earthing line (Umasse) of the vehicle, comprising a bridge of switches (11, ..., 16), as well as a series of modules (21, ..., 26) which are each designed to compare a phase voltage (ϕ1, ϕ2, ϕ3) of the alternator with a reference voltage (Ua, Umasse) and to control one of the switches (11, ..., 16) according to the result of the comparison, the rectifier additionally comprising means (212, 242) to compensate for effects of variations of a reference voltage (Ua, Umasse) on a comparison, wherein each comparison module (21, ..., 26) comprises means (212, 242) which are distinct from those of the other modules, which are designed to carry out in a manner distinct from the other modules (21, ..., 26) a comparison, and compensation for the variations of the reference voltage (Ua, Umasse) of this module, such that each module (21, 26) does not require any signal other than those which have the same variation as the phase voltage (ϕ1, ϕ2, ϕ3), and those which have the same variation as its reference voltage (Ua, Umasse), **characterised in that** each module (21, ..., 26) comprises a comparison component (212, 242) which requires its own energy supply, and produces a comparison result which is dependent on a level of its supply, and **in that** the rectifier comprises means for supplying the component with a voltage with the same variations as the reference voltage (Ua, Umasse) of this component.

2. Rectifier according to claim 1, **characterised in that** one of the reference voltages (Ua, Umasse) is a voltage with the same variations as the on-board supply voltage (Ua).

3. Rectifier according to claim 1 or 2, **characterised in that** one of the reference voltages (Ua, Umasse) is a voltage with the same variations as the earthing voltage (Umasse).

4. Rectifier according to one of claims 1 to 3, **characterised in that** the comparison modules (21, ..., 26) each include an operational amplifier (212,..., 262), a control input of which receives a voltage which represents the on-board network voltage (Ua) or the earthing voltage (Umasse), and the other control input receives a voltage which represents the voltage of a phase (ϕ1, ϕ2, ϕ3).

5. Rectifier according to claim 4, **characterised in that** the component with its own energy supply (212, ..., 262) is the operational amplifier (212, 262).

6. Rectifier according to the preceding claim, **characterised in that** the operational amplifier (212,..., 262) of a module (21, ..., 26) is supplied at its low supply terminal by a first voltage which has the same variations as the said reference voltage, and at its high supply terminal by a second voltage which is equal to the first voltage increased by a constant.

7. Rectifier according to any one of the preceding claims, **characterised in that** it comprises means (D1, R11, R14, D4) for limiting the peak of the phase signal (ϕ1, ϕ2, ϕ3) at the input of at least one comparison module (21, ..., 26).

8. Rectifier according to any one of the preceding claims, **characterised in that** it comprises switching means (Int) for cutting off circulation of current in the rectifier when the latter is stopped.

9. Rectifier according to any one of the preceding claims, **characterised in that** each comparison module (21, ..., 26) comprises a means (212, ..., 262) which can supply at least two signals which are representative respectively of two opposite results of the comparison, and **in that** it also comprises means (T1, R21, R31, Inv4) which can transform these two signals into signals which can be read by a control element (211, ..., 261) of the associated switch (11, ..., 16).

10. Rectifier according to any one of the preceding claims, **characterised in that** it is designed to function as a power supply circuit of an alternator which is functioning in motor mode.

## Patentansprüche

1. Gleichrichter für einen Mehrphasen-Generator in Kraftfahrzeugen, der für den Anschluss zwischen einem Generator, einem Bordnetz (Ua) des Fahrzeugs und einer Masseleitung (Umasse) des Fahrzeugs bestimmt ist und eine Schalterbrücke (11, ..., 16) sowie eine Reihe von Modulen (21, ..., 26) umfasst, die jeweils dafür vorgesehen sind, eine Phasenspannung (ϕ1, ϕ2, ϕ3) des Generators mit einer Referenzspannung (Ua, Umasse) zu vergleichen, und einen der Schalter (11, ..., 16) in Abhängigkeit von dem Ergebnis des Vergleichs zu steuern, wobei der Gleichrichter darüber hinaus Mittel (212, 242) zum Ausgleichen der Auswirkungen von Schwankungen einer Referenzspannung (Ua, Umasse) auf einen Vergleich umfasst, und jedes Vergleichsmodul (21, ..., 26) Mittel (212, 242) umfasst, die von denen der anderen Module getrennt und dafür vorgesehen sind, unabhängig von den anderen Modulen (21, ..., 26) einen Vergleich und einen Ausgleich der Schwankungen der Referenzspannung (Ua, Umasse) dieses Moduls auszuführen, so dass jedes Modul (21, 26) kein anderes Signal benötigt als die, die die gleiche Schwankung haben, wie die Phasenspannung (ϕ1, ϕ2, ϕ3), und die, die die gleiche Schwankung haben wie seine Referenzspannung (Ua, Umasse), **dadurch gekennzeichnet, dass** jedes Modul (21, ..., 26) eine Vergleichskomponente (212, 242) umfasst, die eine eigene Energieversorgung benötigt und ein Vergleichsergebnis erzeugt, das von einem Niveau seiner Versorgung abhängt, und dass der Gleichrichter Mittel zur Versorgung der Komponente mit einer Spannung mit den gleichen Schwankungen wie die Referenzspannung (Ua, Umasse) dieser Komponente umfasst.

2. Gleichrichter nach Anspruch 1, **dadurch gekennzeichnet, dass** eine der Referenzspannungen (Ua, Umasse) eine Spannung ist, die die gleichen Schwankungen wie die Spannung des Bordnetzes (Ua) aufweist.

3. Gleichrichter nach Anspruch 1 oder 2, **dadurch gekennzeichnet, dass** eine der Referenzspannungen (Ua, Umasse) eine Spannung ist, die die gleichen Schwankungen wie die Massespannung (Umasse) aufweist.

4. Gleichrichter nach einem der Ansprüche 1 bis 3, **dadurch gekennzeichnet, dass** die Vergleichsmodule (21, ..., 26) jeweils einen Operationsverstärker (212, ..., 262) umfassen, von dem ein Steuereingang eine Spannung empfängt, die die Spannung des Bordnetzes (Ua) oder der Masse (Umasse) darstellt, und dessen anderer Steuereingang eine Spannung empfängt, die die Spannung einer Phase (ϕ1, ϕ2, ϕ3) darstellt.

5. Gleichrichter nach Anspruch 4, **dadurch gekennzeichnet, dass** die Komponente mit eigener Energieversorgung (212, ..., 262) der Operationsverstärker (212, 262) ist.

6. Gleichrichter nach dem vorhergehenden Anspruch, **dadurch gekennzeichnet, dass** der Operationsverstärker (212, ..., 262) eines Moduls (21, ..., 26) an seiner unteren Anschlussklemme mit einer ersten Spannung, die die gleichen Schwankungen aufweist, wie die besagte Referenzspannung, und an seiner oberen Anschlussklemme mit einer zweiten Spannung gespeist wird, die der ersten Spannung zuzüglich einer Konstante entspricht.

7. Gleichrichter nach einem der vorhergehenden Ansprüche, **dadurch gekennzeichnet, dass** er Mittel (D1, R11, R14, D4) umfasst, um das Phasensignal (ϕ1, ϕ2, ϕ3) am Eingang von mindestens einem Vergleichsmodul (21, ..., 26) zu begrenzen.

8. Gleichrichter nach einem der vorhergehenden Ansprüche, **dadurch gekennzeichnet, dass** er Schaltmittel (Int) umfasst, um einen Stromfluss in dem Gleichrichter bei einem Stopp des Gleichrichters zu unterbrechen.

9. Gleichrichter nach einem der vorhergehenden Ansprüche, **dadurch gekennzeichnet, dass** jedes Vergleichsmodul (21, ..., 26) ein Mittel (212, ..., 262) umfasst, das mindestens zwei Signale liefern kann, die jeweils repräsentativ sind für zwei gegensätzlische Ergebnisse des Vergleichs, und dass es ebenfalls Mittel (T1, R21, R31, Inv4) umfasst, die diese beiden Signale in Signale umwandeln können, die von einem Steuerelement (211, ..., 261) des zugeordneten Schalters (11, ..., 16) gelesen werden können.

10. Gleichrichter nach einem der vorhergehenden Ansprüche, **dadurch gekennzeichnet, dass** er vorgesehen ist, um als Leistungsspeisekreis eines Generators zu arbeiten, der im Motorbetrieb arbeitet.
